# EUROPÄISCHE PATENTANMELDUNG

(11) **EP 2 525 165 A1**
(43) Veröffentlichungstag der Anmeldung: **21.11.2012**
(21) Anmeldenummer: 12164872.9
(22) Anmeldetag: 20.04.2012
(51) Int. Cl.: F24J 2/52

(54) **Traganordnung für Solarmodule mit Ost-West-Ausrichtung**

(30) Priorität: 20.05.2011 DE 102011102236
(71) Anmelder: ROBERT BOSCH GMBH, 70442 Stuttgart (DE)
(72) Erfinder: Kaiser, Uwe, 71336 Waiblingen (DE); Ludwig, Peter, 72072 Tuebingen (DE); Geist, Martin, 74226 Nordheim (DE); Ulmer, Peter, 73660 Urbach (DE)
(74) Vertreter: Maiß, Harald

(57) **Zusammenfassung**

Die Erfindung betrifft eine Traganordnung (10) zur geneigten Befestigung von ebenen, rechteckigen Solarmodulen (12) auf einem ebenen Untergrund, vorzugsweise einem Flachdach, wobei Modulpaare (14) von spitzdachförmig angeordneten Solarmodulen (12) vorgesehen sind, wobei die einander gegenüberliegenden Seitenflächen (13) der Solarmodule (12) eines Modulpaars (14) eine Längsrichtung (11) definieren, wobei mehrere Modulpaare (14) bezüglich der Längsrichtung (11) in einer Modulreihe (15) angeordnet sind, wobei mehrere Modulreihen (15) quer zur Längsrichtung (11) nebeneinander angeordnet sind, wobei ein Modulpaar (14) von zwei gesonderten Dreiecksträger (40) getragen wird, wobei die Dreiecksträger (40) zweier benachbarter Modulreihen (15) jeweils über eine Fußplatte (20) fest miteinander verbunden sind, wobei die Fußplatte (20) zur Auflage auf dem Untergrund ausgebildet ist. Erfindungsgemäß weisen die bezüglich der Längsrichtung (11) benachbarten Dreiecksträger (40) aufeinander zu weisende Haltenuten auf, welche die Solarmodule (12) an ihren Seitenrändern halten können, wobei die Dreiecksträger (40) zwei voneinander weg weisende Haltenuten aufweisen, wobei wenigstens ein Längsträger (70) vorgesehen ist, der sich in Längsrichtung (11) erstreckt, wobei er mehrere bezüglich der Längsrichtung (11) benachbarte Dreiecksträger (40) und/oder Fußplatten (20) fest miteinander verbindet.

## Beschreibung

Die Erfindung betrifft eine Traganordnung gemäß dem Oberbegriff von Anspruch 1.

Aus der DE 20 2009 012 226 U1 ist eine Traganordnung bekannt. Gemäß der Fig. 1 der DE 20 2009 012 226 U1 dient die Traganordnung zur Aufständerung von rechteckigen Solarmodulen 1, die paarweise spitzdachförmig aufgestellt sind. Das eine Solarmodul ist dabei nach Osten geneigt, während das andere Solarmodul nach Westen geneigt ist. Hierdurch nehmen die Solarmodule über den ganzen Tag betrachtet mehr Sonnenenergie auf als bei einer rein horizontalen Anordnung. Bei den Solarmodulen handelt es sich vorzugsweise um fotovoltaische Solarmodule, wobei die Erfindung auch für thermische Solarmodule anwendbar ist.

Die einander gegenüber liegenden Seitenflächen 2 der rechteckigen Solarmodule eines Modulpaares definieren eine Längsrichtung, wobei die Modulpaare bezüglich der Längsrichtung in einer Modulreihe angeordnet sind. Quer zur Längsrichtung sind mehrere Modulreihen nebeneinander angeordnet.

Jedes Modulpaar wird von zwei gesonderten Dreiecksträgern getragen, wobei die benachbarten Dreiecksträger zweier benachbarter Modulreihen auf einer gemeinsamen Fußplatte befestigt sind. Weiter sind die Dreiecksträger zweier benachbarter Modulreihen über die Fußplatten fest miteinander verbunden. Die Fußplatte ist zur Auflage auf einen ebenen Untergrund, vorzugsweise einem Industrieflachdach, ausgebildet. Dabei ist insbesondere daran gedacht, die Fußplatte lose auf den ebenen Untergrund aufzulegen, wobei die gesamte Solarmodulanordnung nur durch ihr Eigengewicht an Ort und Stelle gehalten wird. Damit die vom Wind erzeugten Auftriebskräfte die Solarmodulanordnung nicht anheben können, ist die Neigung der Solarmodule klein, vorzugsweise beträgt sie etwa 10°. Weiter können einzelne oder alle Fußplatten mit Gewichten beschwert sein.

Der Nachteil der bekannten Traganordnung besteht darin, dass jedes Modulpaar von zwei Dreiecksträgern gehalten wird. Die Traganordnung ist mithin teuer. Hierbei ist anzumerken, dass eine fotovoltaische Anlage eine vergleichsweise geringe elektrische Leistung aufweist, so dass eine kostengünstige Traganordnung erforderlich ist, um überhaupt wirtschaftlich Strom produzieren zu können. Darüber hinaus sind die Dreiecksträger aus vielen Teilen zusammengesetzt und mithin teuer in der Herstellung und arbeitsintensiv in der Montage. Die Aufgabe der Erfindung besteht in der Überwindung dieser Nachteile.

Gemäß dem selbständigen Anspruch wird diese Aufgabe dadurch gelöst, dass die bezüglich der Längsrichtung benachbarten Dreiecksträger aufeinander zu weisende Haltenuten aufweisen, welche die Solarmodule an ihren Seitenrändern halten können, wobei die Dreiecksträger zwei voneinander weg weisende Haltenuten aufweisen, wobei wenigstens ein Längsträger vorgesehen ist, der sich in Längsrichtung erstreckt, wobei er mehrere bezüglich der Längsrichtung benachbarte Dreiecksträger und/oder Fußplatten fest miteinander verbindet. Aus der DE 10 2009 022 731 A1 ist es grundsätzlich bekannt, ein Solarmodul durch zwei aufeinander zu weisende Haltenuten am Seitenrand zu halten, wobei jeder Modulträger zwei voneinander weg weisende Haltenuten aufweist. Durch diese Maßnahme wird die Anzahl der erforderlichen Dreiecksträger gegenüber der bekannten Anordnung halbiert, da jeder Dreiecksträger nunmehr zwei benachbarte Modulpaare trägt.

Ohne die ebenfalls vorgeschlagenen Längsträger wäre eine derartige Anordnung aber nicht stabil. Der Abstand zweier benachbarter Dreiecksträger in Längsrichtung könnte sich verändern, insbesondere vergrößern, so dass die Solarmodule aus den Haltenuten herausrutschen könnten. Dies wird durch die Längsträger verhindert. Weiter verhindern die Längsträger, dass die einzelnen Dreiecksträger umkippen können. Dies ist erforderlich, da weder die Fußplatte noch der Eingriff mit den Solarmodulen die Dreiecksträger gegen Umkippen sicher abstützt.

In den abhängigen Ansprüchen sind vorteilhafte Weiterbildungen und Verbesserungen der Erfindung angegeben.

Der Dreiecksträger kann ein langgestrecktes, einstückiges Tragprofil aus stranggepresstem Aluminium umfassen, welches eine Biegung aufweist, um die Dachform zu bilden, wobei die gegenüberliegenden Enden des Tragprofils fest mit einer zugeordneten Fußplatte verbunden sind, wobei die Haltenuten an dem Tragprofil vorgesehen sind. Ein derartiger Dreiecksträger umfasst besonders wenige Teile und ist daher kostengünstig herzustellen. Um den vorgeschlagenen Dreiecksträger bereitzustellen mussten die Erfinder das Vorurteil überwinden, dass sich stranggepresstes Aluminium sehr schlecht biegen lässt, wobei insbesondere Rissbildung zu befürchten ist. Hierbei ist insbesondere zu bedenken, dass die genannten Risse womöglich nicht sofort entstehen, sondern erst im Laufe der Zeit, wenn wechselnde Windlasten an dem Dreiecksträger angreifen. Dieses Problem wird weiter dadurch verschärft, dass der Träger wie nachfolgend beschrieben vorzugsweise eine für die Biegeverformung sehr ungünstige U-Form aufweist. Von diesen Hindernissen haben sich die Erfinder jedoch nicht abhalten lassen, wobei es ihnen gelungen ist, den vorgeschlagenen Dreiecksträger herzustellen, ohne dass es zu der genannten Rissbildung gekommen ist.

Jedem Tragprofil kann eine gesonderte Zugstrebe zugeordnet sein, welche die gegenüberliegenden Enden des Tragprofils fest miteinander verbindet. Durch die Zugstrebe wird die Biegesteifigkeit des Dreiecksträgers erheblich erhöht. Dadurch, dass jedem Dreiecksträger eine gesonderte Zugstrebe zugeordnet ist, kann diese besonders einfach montiert und transportiert werden. Obgleich es auch denkbar ist, dass die Zugstrebe auf Druck beansprucht wird, ist es aus Gründen der Materialersparnis bevorzugt, die Zugstrebe nur auf Zugbeanspruchung auszulegen. Gegebenenfalls ist daran zu denken, die Zugstrebe leicht vorzuspannen, um eine Druckbeanspruchung der Zugstrebe von vorne herein zu vermeiden.

Die Fußplatte kann einen Befestigungssteg aufweisen, wobei der Dreiecksträger eine an den Befestigungssteg angepasste Befestigungsnut aufweist, in welche der Befestigungssteg eingreift, wobei die Befestigungsnut und der Befestigungssteg miteinander verklemmt sind. Durch diese Gestaltung wird eine biegesteife Verbindung zwischen der Fußplatte und dem Dreiecksträger bereitgestellt. Soweit der Dreiecksträger ein Tragprofil aus stranggepresstem Aluminium umfasst, kann die Befestigungsnut kostengünstig beim Strangpressen mit hergestellt werden. Weiter benötigt die Verbindung sehr wenige Teile. Neben dem Dreiecksträger und der Fußplatte ist für die Klemmung nur noch ein Klemmbolzen erforderlich.

Die Querschnittsform des Tragprofils kann im Wesentlichen U-förmig mit einer Basis und zwei senkrecht davon abstehenden Schenkeln ausgebildet sein, wobei die Befestigungsnut von den Schenkeln begrenzt wird. Auf diese Weise kann die Befestigungsnut besonders Material sparend bereitgestellt werden. Weiter besitzt das Tragprofil aufgrund der U-Form eine hohe Biegesteifigkeit.

Die Haltenuten können an der Basis des Tragprofils vorgesehen sein, wobei sie auf der von den Schenkeln abgewandten Seite angeordnet sind. Auf diese Weise können auch die Haltenuten Material sparend bereitgestellt werden.

An den freien Enden der Schenkel kann eine hinterschnittene Kralle vorgesehen sein, wobei der Längsträger, der dem Tragprofil zugeordnet ist, mittels eines gesonderten Klemmteils am Tragprofil befestigt ist, welches in die Kralle eingreift. Damit ist es nicht erforderlich, Löcher in das Tragprofil zu bohren, um den Längsträger daran zu befestigen. Die Montage der Traganordnung ist damit besonders kostengünstig.

Beide Schenkel können an ihren Außenseiten mit einer Vielzahl von Rillen versehen sind, wobei jedem Schenkel eine gesonderte Klemmplatte zugeordnet ist, welche auf den genannten Rillen aufliegt und an diese angepasst ist, wobei wenigstens ein Klemmbolzen vorgesehen ist, welcher die Klemmplatten, die Schenkel und den Befestigungssteg durchsetzt, um das Tragprofil mit der Fußplatte zu verklemmen, wobei in den Schenkeln ein Langloch für den Klemmbolzen vorgesehen ist, während der Befestigungssteg und die Klemmplatten kreisrunde Bohrungen aufweisen, die an den Klemmbolzen angepasst sind. Die Klemmplatte dient in erster Linie als Unterlage für den Kopf und die Mutter des Klemmbolzens, damit sich der Träger beim Festdrehen des Klemmbolzens nicht plastisch verformt. Weiter soll durch die Langlöcher in den Schenkeln ein Toleranzausgleich ermöglicht werden, wobei durch die Rillen in den Schenkeln und in der Klemmplatte dennoch eine formschlüssige Verbindung zwischen den genannten Teilen besteht, so dass eine spätere Relativverschiebung sicher ausgeschlossen ist.

Die Fußplatte kann aus Blech hergestellt sein, so dass der Klemmbolzen im Inneren des Befestigungssteges frei zugänglich ist, wobei das Ende der Zugstrebe dort formschlüssig in den Klemmbolzen eingreift. Eine Fußplatte aus Blech kann kostengünstig hergestellt werden und ist dabei besonders Material sparend. Darüber hinaus kann der ohnehin vorhandene Klemmbolzen zur Befestigung der Zugstrebe verwendet werden, so dass Teile eingespart werden.

Die voneinander weg weisenden Haltenuten eines Dreiecksträgers können unterschiedlich tief ausgeführt sein, damit die Solarmodule nachträglich in die fertig montierte Traganordnung eingebaut werden kann. Hierzu wird auf die Parallelanmeldung der Anmelderin mit dem gleichen Prioritätstag wie die vorliegende Anmeldung verwiesen.

Der Längsträger kann in Form eines Kabelkanals ausgebildet sein, wobei er vorzugsweise aus zwei U-förmigen Blechbiegeprofilen zusammengesetzt ist, die an ihrer Basis aneinander anliegen. Damit dienen die Längsträger nicht nur zur Versteifung der Traganordnung sondern auch zur Aufnahme der elektrischen Anschlussleitungen für die Solarmodule. Der bevorzugte Längsträger aus Blechbiegeprofilen kann besonders kostengünstig hergestellt werden, wobei er gleichzeitig eine hohe Biegesteifigkeit aufweist.

Die Erfindung wird im Folgenden anhand der beigefügten Zeichnungen näher erläutert. Es stellt dar:
- Fig. 1: eine perspektivische Ansicht einer erfindungsgemäßen Traganordnung mit montierten Solarmodulen;
- Fig. 2: eine perspektivische Ansicht eines Teils der Anordnung nach Fig. 1 ohne die Solarmodule;
- Fig. 3: eine Explosionsansicht der Traganordnung im Bereich der Fußplatte;
- Fig. 4: eine Schnittansicht im Bereich der Fußplatte, wobei die Schnittebene senkrecht zur Längsrichtung verläuft;
- Fig. 5: eine Explosionsansicht im Bereich der Verbindung zwischen dem Tragprofil und dem Längsträger; und
- Fig. 6: eine Schnittansicht im Bereich der Verbindung zwischen dem Tragprofil und dem Längsträger, wobei die Schnittebene parallel zur Längsrichtung verläuft.

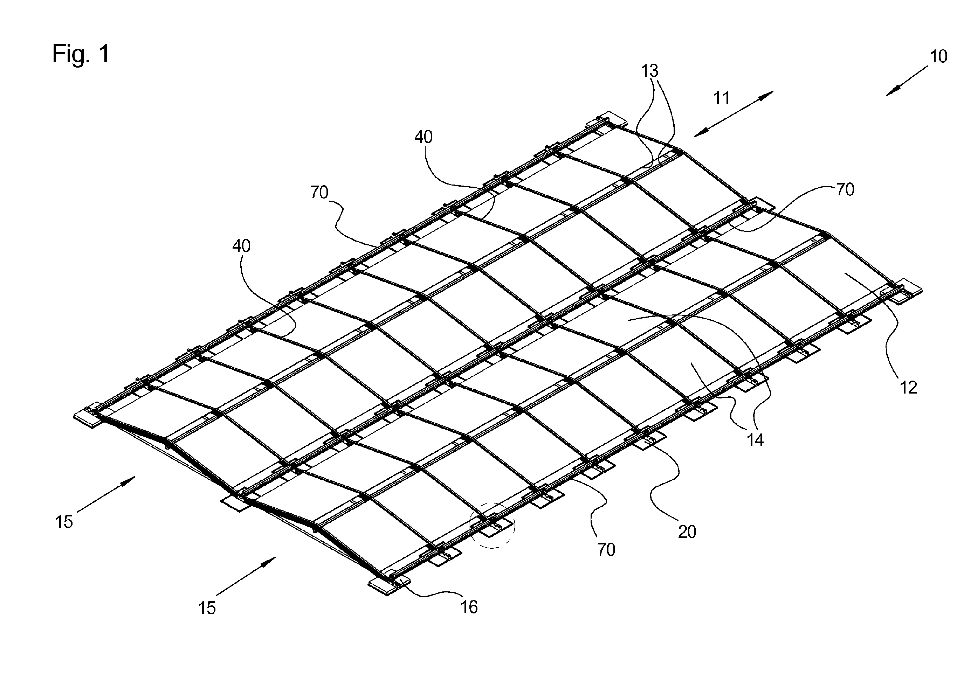

Fig. 1 zeigt eine perspektivische Ansicht einer erfindungsgemäßen Traganordnung 10 mit montierten Solarmodulen 12. Die Solarmodule 12 sind als ebene, rahmenlose fotovoltaische Solarmodule 12 ausgeführt, wobei sie paarweise 14 spitzdachförmig angeordnet sind. Die einander gegenüberliegenden Seitenflächen 13 der rechteckigen Solarmodule 12 definieren eine Längsrichtung 11, wobei mehrere Modulpaare 14 bezüglich der Längsrichtung 11 in einer Modulreihe 15 angeordnet sind. Die Anzahl der Modulpaare 14 in einer Modulreihe 15 ergibt sich aus der zur Verfügung stehenden Aufstellfläche. Quer zur Längsrichtung 11 sind mehrere Modulreihen 15 nebeneinander angeordnet, wobei rein beispielhaft zwei Modulreihen 15 dargestellt sind. Die Anzahl an Modulreihen 15 ergibt sich wiederum aus der zur Verfügung stehenden Aufstellfläche.

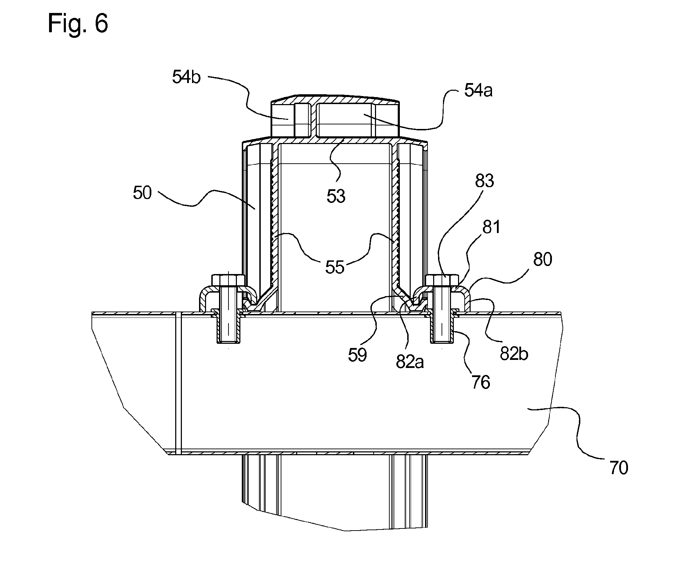

Zwischen zwei Modulpaaren 14 ist je ein Dreiecksträger 40 angeordnet, der sich quer zur Längsrichtung 11 erstreckt. Die Dreiecksträger 40 halten die zugeordneten Solarmodule 14 an ihren Seitenrändern in Haltenuten (Nr. 54a; 54b; Fig. 6), wobei die Haltenuten benachbarter Dreiecksträger 40 aufeinander zu weisen. Die Dreiecksträger 40 sind an ihren beiden Enden mit Fußplatten 20 aus verzinktem Stahlblech fest verbunden. Die Fußplatten 20 liegen wiederum lose auf einem ebenen Untergrund, beispielsweise auf einem Flachdach, auf. Einzelne oder alle Fußplatten 20 sind mit Ballastplatten 16 aus Beton beschwert, damit die Solaranlage 10; 12 ein genügend großes Eigengewicht aufweist. Das Eigengewicht der Solaranlage 10; 12 ist nach oben durch die meist geringe Tragfähigkeit des Flachdachs beschränkt. Gleichzeitig muss das Eigengewicht so groß sein, dass die durch Wind verursachten Auftriebskräfte nicht ausreichen, um die Solaranlage 10; 12 vom Untergrund abzuheben. Die Neigung der nach Osten und Westen ausgerichteten Solarmodule 12 beträgt daher nur 10°, so dass die genannten Auftriebskräfte gering sind. Im Wesentlichen sind alle Fußplatten 20 und alle Dreiecksträger 40 identisch ausgebildet.

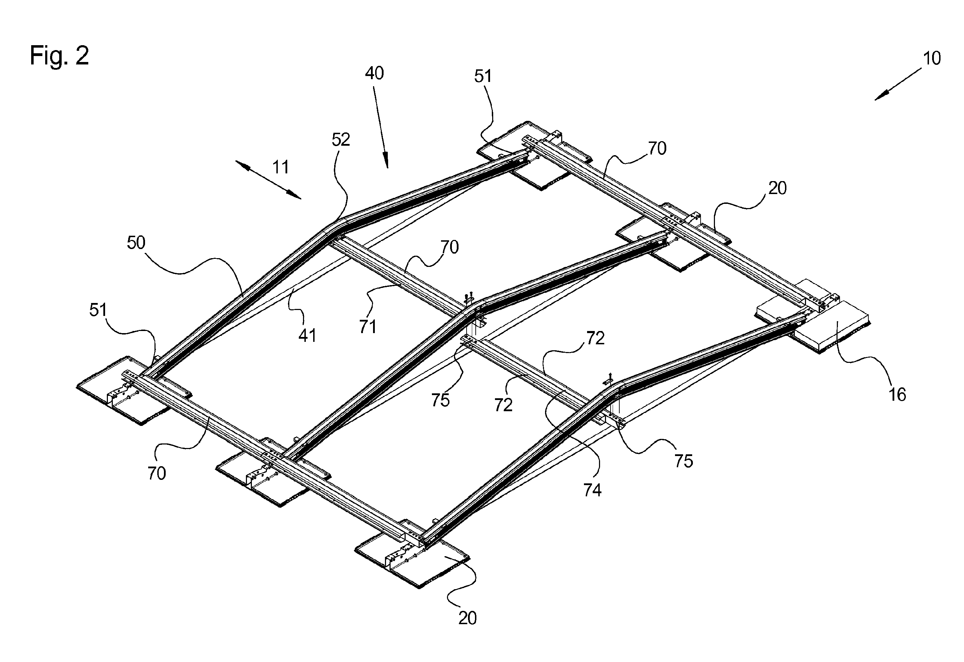

Fig. 2 zeigt eine perspektivische Ansicht eines Teils der Anordnung 10 nach Fig. 1 ohne die Solarmodule. Die Dreiecksträger 40 sind aus einem einstückigen Tragprofil 50 und einer einstückigen Zugstrebe 41 zusammengesetzt. Das langgestreckte Tragprofil 50 ist aus Aluminium im Strangpressverfahren hergestellt, wobei es in der Mitte eine Biegung 52 aufweist, um die Dachform zu bilden. Die Zugstrebe 41 ist in Form einer Rechteckleiste aus Stahl ausgeführt, welche mit den gegenüberliegenden Enden 51 des Tragprofils 50 fest verbunden ist.

Die Enden 51 des Tragprofils 50 sind wiederum mit den Fußplatten 20 fest verbunden, auf denen zwei gesonderte, rechteckige Ballastplatten 16 aus Beton aufliegen können, die jeweils etwa 10 kg schwer sind. Die Fußplatten 20 und die Tragprofile 50 sind wiederum über Längsträger 70 fest verbunden, die sich in Längsrichtung 11 erstrecken. Die Längsträger 70 sind mehrstückig aus U-förmigen Blechbiegeprofilen 72 zusammengesetzt. Jedes Blechbiegeprofil 72 erstreckt sich über den Abstand zweier benachbarter Dreiecksträger 40, wobei jeweils zwei Blechbiegeprofile 72 an ihrer Basis aneinander anliegen und dort miteinander verschraubt sind. Die beiden Blechbiegeprofile 72 eines Profilpaares 74 sind versetzt zueinander angeordnet, so dass jeweils eines an einem Ende des Profilpaares 74 übersteht 75, damit es an der Fußplatte 20 oder am Tragprofil 50 befestigt werden kann. Im Bereich der Befestigungsstellen ergänzen sich die überstehenden Enden 75 zweier benachbarter Profilpaare 74, so dass sich die Längsträger 70 insgesamt ununterbrochen über die gesamte Länge der Traganordnung 10 erstrecken. Aufgrund ihrer U-Form können die Längsträger 70 die Anschlussleitungen für die Solarmodule in der Art eines Kabelkanals 71 aufnehmen.

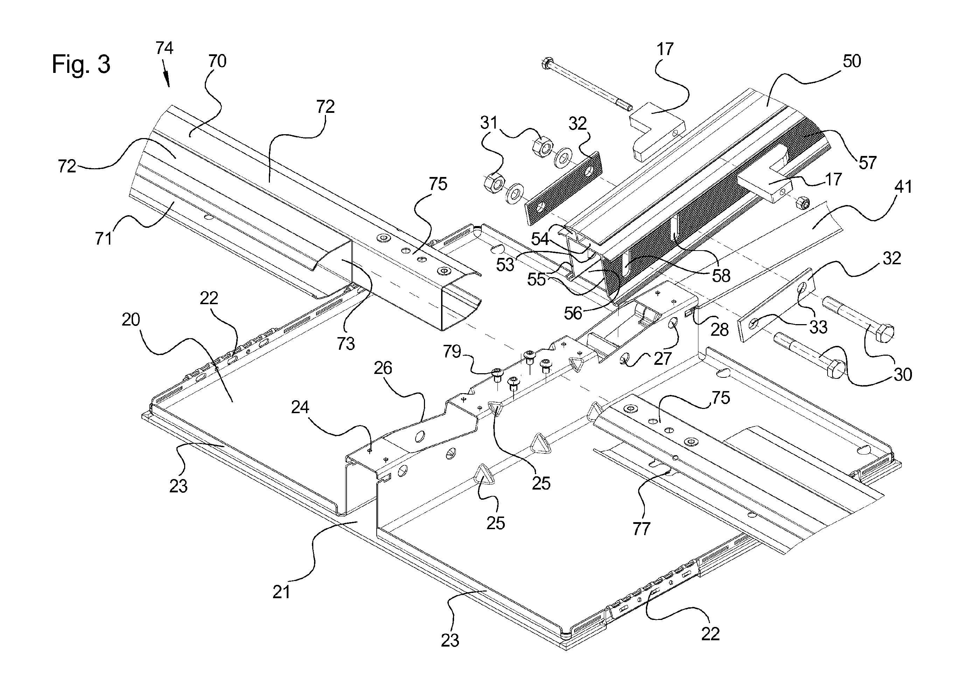

Fig. 3 zeigt eine Explosionsansicht der Traganordnung im Bereich der Fußplatte 20. Die in etwa quadratische Fußplatte 20 ist aus verzinktem Stahlblech gefertigt. In der Mitte der Fußplatte 20 ist ein Befestigungssteg 24 angeordnet, der in Form einer U-förmigen Biegung ausgeführt ist. Die entsprechenden Biegekanten sind durch mehrere Sicken 25 versteift. Über den gesamten Rand der Fußplatte 20 sind Umbörtelungen 23 vorgesehen, welche die Ballastplatten (Nr. 16; Fig. 2) in Position halten. Unter der Fußplatte 20 ist ein in etwa 4 mm dickes Faservlies 21 angeordnet, damit die Dachhaut, auf der die Fußplatte 20 aufliegt, nicht beschädigt wird. Das Faservlies 21 erstreckt sich über die gesamte Fußplatte 20. An den bereits angesprochenen Umbörtelungen 23 sind Klemmvorrichtungen 22 einstückig vorgesehen, mit denen das Faservlies 21 an der Fußplatte 20 befestigt ist.

Die überstehenden Enden 75 zweier benachbarter Profilpaare 74 eines Längsträgers 70 sind mit Schraubbolzen 79 in der Mitte des Befestigungssteges 24 befestigt. In den genannten überstehenden Enden 75 sind schlüssellochförmige Durchbrüche 77 vorgesehen, um die Köpfe der Schraubbolzen 79 dort einführen zu können, wenn diese bereits mit der Fußplatte 20 verschraubt sind.

Zu beiden Seiten benachbart zum Längsträger 70 ist je eine geneigte Aussparung 26 vorgesehen, die an das etwa um 10° geneigte Tragprofil 50 angepasst ist. Die Querschnittsform des Tragprofils 50 ist im Wesentlichen U-förmig mit einer Basis 53 und zwei senkrecht davon abstehenden Schenkel 55 ausgebildet, so dass die Schenkel 55 und die Basis 53 eine Befestigungsnut 56 begrenzen, die den Befestigungssteg 24 der Fußplatte 20 im Wesentlichen spielfrei umgreift. Weiter sind zwei Klemmbolzen 30 mit zugeordneten Muttern 31 vorgesehen, welche die Schenkel 55 des Tragprofils 50 und den Befestigungssteg 24 durchsetzen, um die Befestigungsnut 56 und den Befestigungssteg 24 miteinander zu verklemmen.

Zum Zweck des Toleranzausgleiches sind in den genannten Schenkeln 55 Langlöcher 58 für die Klemmbolzen 30 vorgesehen, während der Befestigungssteg 24 an die Klemmbolzen angepasste, kreisrunde Bohrungen 27 aufweist.

Damit die Klemmbolzen 30 sich nicht gegenüber dem Tragprofil 50 verschieben können, ist jedem Schenkel 55 eine Klemmplatte 32 mit kreisrunden Bohrungen 33, die an die Klemmbolzen 30 angepasst sind, zugeordnet. An den Außenseiten der beiden Schenkel 55 ist jeweils ein Vielzahl von Rillen 57 vorgesehen, auf welchen die Klemmplatte 32 aufliegt, wobei sie an die Rillen 57 angepasst ist. Die Klemmplatte 32 kann sich also nicht in die Erstreckungsrichtung der Langlöcher 58 verschieben, wenn diese in die Rillen 57 der Schenkel 55 formschlüssig eingreift.

An der Basis 53 des Tragprofils 50 sind zwei voneinander weg weisende Haltenuten 54 für die Solarmodule vorgesehen und zwar auf der von den Schenkeln 55 abgewandten Seite. In den beiden Haltenuten 54 ist jeweils ein gesondertes Anschlagteil 17 fest aufgenommen, welches verhindert, dass die Solarmodule in Erstreckungsrichtung des Tragprofils 50 aus der Haltenut 54 herausrutschen können. Das Anschlagteil 17 ist Gegenstand einer weiteren Patentanmeldung der Anmelderin mit dem gleichen Prioritätstag wie die vorliegende Anmeldung.

Die Zugstrebe 41 in Form einer Rechteckleiste greift in angepasste Führungsnuten 28 am Befestigungssteg 24 ein, damit deren Lage in einer Richtung senkrecht zum Untergrund festgelegt ist.

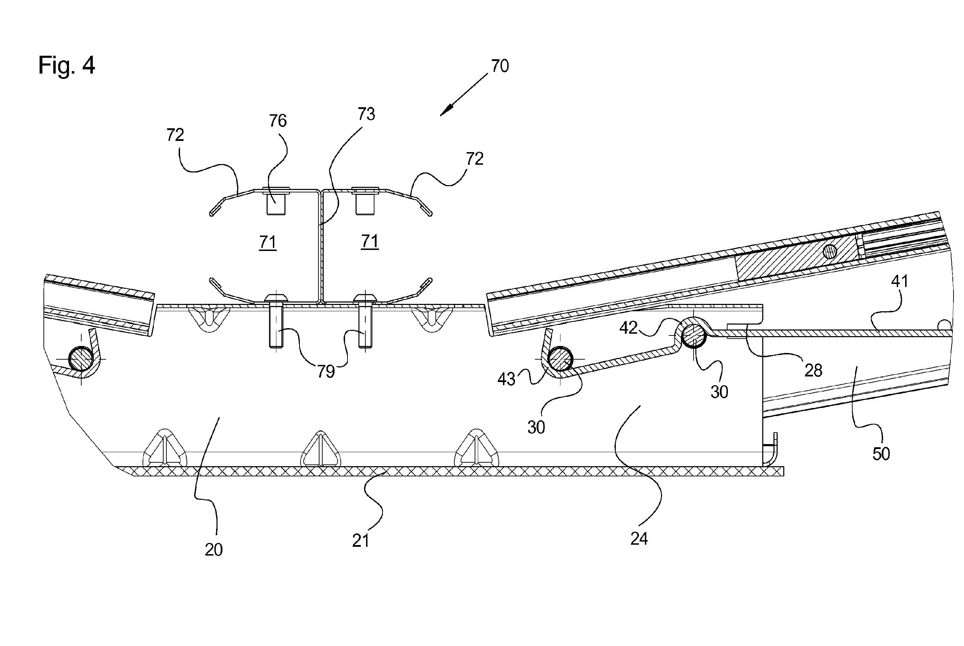

Fig. 4 zeigt eine Schnittansicht im Bereich der Fußplatte 20, wobei die Schnittebene senkrecht zur Längsrichtung verläuft. Zu erkennen ist, wie die Zugstrebe 41 die beiden Klemmbolzen 30 im Inneren des Befestigungssteges 24 der Fußplatte 20 formschlüssig umgreift. Dabei ist an dem Ende der Zugstrebe 41 eine erste Biegung 42 in Form eines Halbrunds vorgesehen, welche den äußern Klemmbolzen 30 von oben umgreift. Die zweite Biegung 43 ist hakenförmig ausgebildet und umgreift den zugeordneten inneren Klemmbolzen 30 von unten. Weiter greift die Zugstrebe 41 in die bereits angesprochene Führungsnut 28 ein, so dass diese nicht mehr von der Fußplatte 20 gelöst werden kann, ohne die Klemmbolzen 30 zu entfernen. Anzumerken ist noch, dass die Zugstrebe 41 im Inneren des Befestigungsstegs 24 eine geringere Breite aufweist als im Bereich der Führungsnut 28 und außerhalb des Befestigungssteges 24.

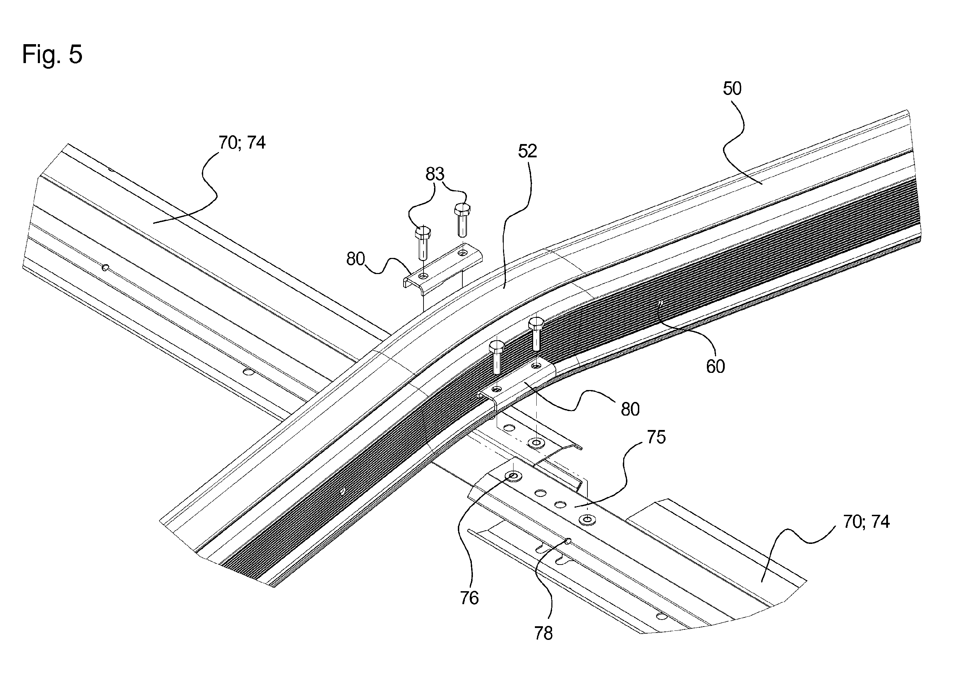

Fig. 5 zeigt eine Explosionsansicht im Bereich der Verbindung zwischen dem Tragprofil 50 und dem Längsträger 70. Fig. 6 zeigt eine Schnittansicht im Bereich der Verbindung zwischen dem Tragprofil 50 und dem Längsträger 70, wobei die Schnittebene parallel zur Längsrichtung verläuft.

Die überstehenden Enden 75 der Profilpaare 74 des Längsträgers 70 sind über zwei gesonderte U-förmige Klemmteile 80 mit dem Tragprofil 50 verschraubt, wobei die Klemmteile 80 zu beiden Seiten des Tragprofils 50 angeordnet sind. An den freien Enden der Schenkel 55 des Tragprofils 50 ist je eine hinterschnittene Kralle 59 vorgesehen, in die ein Schenkel 82a des Klemmteils 80 eingreift. Der andere Schenkel 82b des Klemmteils 80 stützt sich auf dem Längsträger 70 ab. Die Basis 81 eines jeden Klemmteils 80 wird von zwei Klemmschrauben 83 durchsetzt, die in eine gesonderte Gewindebuchse 76 eingreift, die formschlüssig mit dem Längsträger 70 aus Blech verbunden ist.

Weiter ist auf die verschiedenen Bohrungen 60; 78 für Kabelbinder hinzuweisen, die verteilt entlang dem Tragprofil 50 und dem Längsträger 70 angeordnet sind. Mit den (nicht dargestellten) Kabelbindern werden beispielsweise die Zuleitungen für die Solarmodule gehalten.

In Fig. 6 ist weiter zu erkennen, dass die beiden voneinander weg weisenden Haltenuten 54 eines Tragprofils unterschiedlich tief ausgeführt sind. Bei der Montage des Solarmoduls wird dieses zuerst vollständig mit einem Seitenrand in die tiefere Haltenut 54a eingeschoben. Anschließend wird der gegenüberliegende Seitenrand in die andere weniger tiefe Haltenut 54b eingeschoben, wobei es aus der tieferen Haltenut 54a wieder herausgezogen wird. Dieses Montageverfahren ist beispielsweise aus der DE 20 2007 008 659 U1 bekannt.

### Bezugszeichenliste

- 10: Traganordnung
- 11: Längsrichtung
- 12: Solarmodul
- 13: gegenüberliegende Seitenfläche
- 14: Modulpaar
- 15: Modulreihe
- 16: Ballastplatte
- 17: Anschlagteil

- 20: Fußplatte
- 21: Faservlies
- 22: Klemmvorrichtung für Faservlies
- 23: Umbörtelung
- 24: Befestigungssteg
- 25: Sicke
- 26: Aussparung
- 27: kreisrunde Bohrung für Klemmbolzen
- 28: Führungsnut für Zugstrebe

- 30: Klemmbolzen
- 31: Mutter
- 32: Klemmplatte
- 33: kreisrunde Bohrung der Klemmplatte

- 40: Dreiecksträger
- 41: Zugstrebe
- 42: erste Biegung der Zugstrebe
- 43: zweite Biegung der Zugstrebe

- 50: Tragprofil
- 51: Ende des Tragprofils
- 52: Biegung des Tragprofils
- 53: Basis des Tragprofils
- 54: Haltenut
- 54a: tiefere Haltenut
- 54b: weniger tiefe Haltenut
- 55: Schenkel des Tragprofils
- 56: Befestigungsnut
- 57: Rillen
- 58: Langloch
- 59: hinterschnittene Kralle
- 60: Bohrung für Kabelbinder im Tragprofil

- 70: Längsträger
- 71: Kabelkanal
- 72: Blechbiegeprofil
- 73: Basis des Blechbiegeprofils
- 74: Profilpaar
- 75: überstehendes Ende
- 76: Gewindebuchse
- 77: schlüssellochförmiger Durchbruch
- 78: Bohrung für Tragprofil im Längsträger
- 79: Schraubbolzen

- 80: Klemmteil
- 81: Basis des Klemmteils
- 82a; b: Schenkel des Klemmteils
- 83: Klemmschraube

## Patentansprüche

1. Traganordnung (10) zur geneigten Befestigung von ebenen, rechteckigen Solarmodulen (12) auf einem ebenen Untergrund, vorzugsweise einem Flachdach, wobei Modulpaare (14) von spitzdachförmig angeordneten Solarmodulen (12) vorgesehen sind, wobei die einander gegenüberliegenden Seitenflächen (13) der Solarmodule (12) eines Modulpaars (14) eine Längsrichtung (11) definieren, wobei mehrere Modulpaare (14) bezüglich der Längsrichtung (11) in einer Modulreihe (15) angeordnet sind, wobei mehrere Modulreihen (15) quer zur Längsrichtung (11) nebeneinander angeordnet sind, wobei ein Modulpaar (14) von zwei gesonderten Dreiecksträgern (40) getragen wird, wobei die Dreiecksträger (40) zweier benachbarter Modulreihen (15) jeweils über eine Fußplatte (20) fest miteinander verbunden sind, wobei die Fußplatte (20) zur Auflage auf dem Untergrund ausgebildet ist,
**dadurch gekennzeichnet, dass** die bezüglich der Längsrichtung (11) benachbarten Dreiecksträger (40) aufeinander zu weisende Haltenuten (54) aufweisen, welche die Solarmodule (12) an ihren Seitenrändern halten können, wobei die Dreiecksträger (40) zwei voneinander weg weisende Haltenuten (54a; 54b) aufweisen, wobei wenigstens ein Längsträger (70) vorgesehen ist, der sich in Längsrichtung (11) erstreckt, wobei er mehrere bezüglich der Längsrichtung (11) benachbarte Dreiecksträger (40) und/oder Fußplatten (20) fest miteinander verbindet.

2. Traganordnung nach Anspruch 1,
**dadurch gekennzeichnet, dass** der Dreiecksträger (40) ein langgestrecktes, einstückiges Tragprofil (50) aus stranggepresstem Aluminium umfasst, welches eine Biegung (52) aufweist, um die Dachform zu bilden, wobei die gegenüberliegenden Enden (51) des Tragprofils (50) fest mit einer zugeordneten Fußplatte (20) verbunden sind, wobei die Haltenuten (54; 54a; 54b) an dem Tragprofil (50) vorgesehen sind.

3. Traganordnung nach Anspruch 2,
**dadurch gekennzeichnet, dass** jedem Tragprofil (50) eine gesonderte Zugstrebe (41) zugeordnet ist, welche die gegenüberliegenden Enden (51) des Tragprofils (50) fest miteinander verbindet.

4. Traganordnung nach einem der vorstehenden Ansprüche,
**dadurch gekennzeichnet, dass** die Fußplatte (20) einen Befestigungssteg (24) aufweist, wobei der Dreiecksträger (40) eine an den Befestigungssteg (24) angepasste Befestigungsnut (56) aufweist, in welche der Befestigungssteg (24) eingreift, wobei die Befestigungsnut (56) und der Befestigungssteg (24) miteinander verklemmt sind.

5. Traganordnung nach Anspruch 4, rückbezogen auf Anspruch 2,
**dadurch gekennzeichnet, dass** die Querschnittsform des Tragprofils (50) im Wesentlichen U-förmig mit einer Basis (53) und zwei senkrecht davon abstehenden Schenkeln (55) ausgebildet ist, wobei die Befestigungsnut (56) von den Schenkeln (55) begrenzt wird.

6. Traganordnung nach Anspruch 5,
**dadurch gekennzeichnet, dass** die Haltenuten (54a; 54b) an der Basis (53) des Tragprofils (50) vorgesehen sind, wobei sie auf der von den Schenkeln (55) abgewandten Seite angeordnet sind.

7. Traganordnung nach Anspruch 5 oder 6,
**dadurch gekennzeichnet, dass** an den freien Enden der Schenkel (55) eine hinterschnittene Kralle (59) vorgesehen ist, wobei der Längsträger (70), der dem Tragprofil (50) zugeordnet ist, mittels eines gesonderten Klemmteils (80) am Tragprofil (50) befestigt ist, welches in die Kralle (59) eingreift.

8. Traganordnung nach einem der Ansprüche 5 bis 7,
**dadurch gekennzeichnet, dass** beide Schenkel (55) an ihren Außenseiten mit einer Vielzahl von Rillen (57) versehen sind, wobei jedem Schenkel (55) eine gesonderte Klemmplatte (32) zugeordnet ist, welche auf den genannten Rillen (57) aufliegt und an diese angepasst ist, wobei wenigstens ein Klemmbolzen (30) vorgesehen ist, welcher die Klemmplatten (32), die Schenkel (55) und den Befestigungssteg (24) durchsetzt, um das Tragprofil (50) mit der Fußplatte (20) zu verklemmen, wobei in den Schenkeln (55) ein Langloch (58) für den Klemmbolzen (30) vorgesehen ist, während der Befestigungssteg (24) und die Klemmplatten (32) kreisrunde Bohrungen (27; 33) aufweisen, die an die Klemmbolzen (30) angepasst sind.

9. Traganordnung nach Anspruch 8, rückbezogen auf Anspruch 2,
**dadurch gekennzeichnet, dass** die Fußplatte (20) aus Blech hergestellt ist, so dass der Klemmbolzen (30) im Inneren des Befestigungssteges (24) frei zugänglich ist, wobei das Ende der Zugstrebe (41) dort formschlüssig in den Klemmbolzen (30) eingreift.

10. Traganordnung nach einem der vorstehenden Ansprüche,
**dadurch gekennzeichnet, dass** die voneinander weg weisenden Haltenuten (54a; 54b) eines Dreiecksträgers (50) unterschiedlich tief ausgeführt sind.

11. Traganordnung nach einem der vorstehenden Ansprüche,
**dadurch gekennzeichnet, dass** der Längsträger (70) in Form eines Kabelkanals (71) ausgebildet ist, wobei er vorzugsweise aus zwei U-förmigen Blechbiegeprofilen (72) zusammengesetzt ist, die an ihrer Basis (73) aneinander anliegen.
